# EUROPEAN PATENT APPLICATION

(11) **EP 2 216 974 A1**
(43) Date of publication of application: **11.08.2010**
(21) Application number: 09290080.2
(22) Date of filing: 04.02.2009
(51) Int. Cl.: H04M 3/56, G10L 15/18

(54) **Method of providing a communication service**

(71) Applicant: Alcatel Lucent, 75008 Paris (FR)
(72) Inventor: Wajda, Wieslawa, 75210 Keltern (DE)
(74) Representative: Zinsinger, Norbert

(57) **Abstract**

The invention concerns a method of providing a communication service in a telecommunication system (100), as well as a virtual call room module (1) to execute this method. A request for creation of a virtual call room (CR1) is received from a user of the communication service. The requested virtual call room (CR1) associated with the user is created. One or more telecommunication devices (TE1) of the user are associated with the created virtual call room (CR1). A request from another user of the telecommunication system (100) to connect a telecommunication device (TU) of the other user with the virtual call room (CR1) of the user is received. After connection of the other user's telecommunication device (TU) with the virtual call room (CR1) of the user, a bi-directional communication connection with perspicuity control between at least one of the user's one or more telecommunication devices (TE1) and the other user's telecommunication device (TU) by means of the virtual call room (CR1) is established.

## Description

The present invention relates to a method of providing a communication service in a telecommunication system, and a virtual call room module to execute said method.

Today, a user of a telecommunication service such as a telephone call or a conference call is faced with various limitations. Since a telephone call or a conference call only allows a short-term contact among the participants, a user may not be able to stay in touch with a person or a group as long as they wish. Furthermore, there is a fixed binding of a user to a telecommunication device, i.e. each user is bound to a phone number.

In case of a conference call or a chat room involving a multitude of participants, the voice of a specific participant may get lost in the talk of the other participants and there is no control over how clearly a specific participant can be heard. What is more, a caller who tries to reach another user on the phone may encounter a busy ring tone, thus rendering impossible a spontaneous or urgent communication.

Known telecommunication systems usually charge that terminal from where a telecommunication is initiated. For example in conference telecommunication systems, the charge for a telecommunication service usually is associated with the terminal where the telecommunication has been initiated. Therefore, it is impossible for a user to use a terminal of another user and have the telecommunication system charge himself for the communication.

A special type of group communication, a conference call, also involves a lot of limitations. Participants of a conference call initially have to agree on a common time for starting and terminating the conference call. A conference call may have to be arranged in advance with a provider of a conference call service. Furthermore, it may be necessary for the participants of the conference call to dial a specific code, e.g., issued by a provider of a conference call service, in order to be admitted to the conference call. Hence, today's teleconferencing systems do not support lifelike communication.

It is the object of the present invention to provide an improved telecommunication service.

The object of the present invention is achieved by a method of providing a communication service in a telecommunication system, the method comprising the steps of receiving, from a user of the communication service, a request for creation of a virtual call room, creating the requested virtual call room associated with the user as an owner of the virtual call room, allocating one or more telecommunication devices of the telecommunication system to the created virtual call room, as one or more telecommunication devices associated with the user; receiving from another user of the telecommunication system one or more requests to connect one or more telecommunication devices with the virtual call room of the user, and after connection of the other user's one or more telecommunication devices with the virtual call room of the user, establishing a bi-directional communication connection with perspicuity control between at least one of the user's one or more telecommunication devices and at least one of the other user's one or more telecommunication devices by means of the virtual call room. Moreover, the object of the present invention is achieved by a virtual call room module for providing a communication service in a telecommunication system, the virtual call room module comprising a control unit adapted to receive, from a user of the communication service, a request for creation of a virtual call room, create the requested virtual call room associated with the user as an owner of the virtual call room, allocate one or more telecommunication devices of the telecommunication system with the created virtual call room, as one or more telecommunication devices associated with the user, receive from another user of the telecommunication system one or more requests to connect one or more telecommunication devices with the virtual call room of the user, as one or more telecommunication devices associated with the other user, and, after connection of the other user's one or more telecommunication devices with the virtual call room of the user, establish a bi-directional communication connection with perspicuity control between at least one of the user's one or more telecommunication devices and at least one of the other user's one or more telecommunication devices by means of the virtual call room.

The statement that a virtual call room is "associated with a user as an owner" of said virtual call room or the statement that a virtual call room is "owned by a user" is not meant to imply that the user possesses the virtual call room or has the virtual call room as property. Instead this statement is meant to express that the user, as the initiator of the virtual call room, has, preferably exclusive, rights to change the state of the virtual call room, e.g., to delete the virtual call room. A user may be an owner of a virtual call room or not. A user of the communication service is automatically also a user of the telecommunication system.

The present invention creates a telecommunication system based on a virtual call room concept where speech or other data, e.g. files, are bi-directionally broad-cast and transferred, respectively, between sets of terminal equipment/ user equipment (= UE) connected to the same virtual call room. The connections are created over virtual call rooms.

The virtual call room, hereinafter also shortly referred to as "call room", is an abstract telecommunication entity placed anywhere in a memory of a telecommunication equipment or implemented as a piece of a telecommunication hardware. From the software point of view, the virtual call room is a software object constituting of a number of member data elements and methods. A virtual call room may be a permanent call room or a temporary call room.

The present invention allows a ubiquitous and task-focused information exchange in small and huge participant groups. The present invention presents a flexible and cost effective telecommunication service and allows spontaneous evolving of a communication group. The present invention improves the way of communicating via telecommunication systems. Users of the present invention are able to stay in touch with each other without the hitherto existing limitations. The communication partners are there as long as the users wish and with a feeling that they are close, i.e. the communication connection between two users is maintained as long as the users want to. This makes the "busy" ring tone superfluous.

The present invention enables a user of a telecommunication network to stay in a flexible but permanent contact with single or multiple groups of interest. The present invention is suited for collaborative working in teams spread across wide area or based on a home office environment. It also allows communication partners living or located at different locations, e.g., family members, members of an interest group, or friends, to keep a close contact. Thus, the invention offers an improved pervasive communication opportunity to a society which shows a need for this kind of communication, as is shown, e.g., by today's trends of chat rooms (cf. Skype), blogs, etc.

Further advantages are achieved by embodiments of the invention as described in the following and as indicated by the dependent claims.

According to an embodiment of the invention, the method of providing a communication service in a telecommunication system comprises the steps of
1. receiving, from a user of the communication service, a request for creation, deletion or editing of a virtual call room and
   a. creating the requested virtual call room associated with the user as an owner of the virtual call room,
   b. deleting the requested virtual call room owned by the requesting user,
   c. editing of parameter of the requested virtual call room owned by the requesting user,
2. allocating, preferably for purpose of notification, one or more telecommunication devices of the telecommunication system to the created virtual call room, as one or more telecommunication devices associated with the call room, and indirectly with the user,
3. receiving, from another user of the telecommunication system, one or more requests to connect one or more telecommunication devices or preferably any other device to the virtual call room of the user as the owner, and,
4. after connection of the other user's one or more telecommunication devices to the virtual call room of the user,
   a. providing a notification of the user as the owner by means of one or more telecommunication devices allocated to the call room about a connection establishment and connecting at least one of these devices to the call room, and
   b. establishing a bi-directional communication connection with perspicuity control between at least one of the other user's one or more telecommunication devices connected to the call room and the at least one connected user's telecommunication device by means of the virtual call room,
5. providing a perspicuity control for established communication by means of
   a. a decision to separate speakers into speaker groups based on an understandability coefficient measured as for example one or more of the following:
      i. number of interruptions per second,
      ii. spectral perceptibility of single vowels and consonants,
      iii. perceptibility of words or sentences,
   b. a decision to consolidate a first and a second speaker group into a bigger group based for example on one or more of the following values measured in the first and/or the second speaker group:
      i. ratio of silent time to speaking time,
      ii. number of aborted conversations,
      iii. number of questions without answer,
   c. separation criteria based for example on one or more of the following criteria, whereby the two or more users are referred to as speakers:
      i. speakers' location, i.e. positions of the two or more users,
      ii. speakers' time of entry into a conversation,
      iii. speakers' interaction based on a semantic or a temporal correlation,
      iv. speaker context expressed as a metric using a subset of speaker-related attributes,
      v. a meaningful combination of the above,
   d. shifting all other but members of the speaker group which the speaker belongs to into a background by means of one or more of the following:
      i. a volume reduction,
      ii. a time shift,
      iii. a frequency shift,
      iv. a spectral treatment
   e. a speaker interruption control achieved for example by one or more of the following:
      i. a flexible speaking time sharing,
      ii. a volume reduction for all speakers not marked as speaking,
      iii. a fixed time slicing,
      iv. dynamic speaker lists,
      v. other methods,
6. providing a method allowing speakers to move between speaker groups.

According to an embodiment of the invention, the virtual call room module for providing a communication service in a telecommunication system comprises
1. a control unit implemented in hardware and or software adopted to manage users, telecommunication fees, and terminal equipment,
2. a control unit implemented in hardware and or software adapted to manage call room objects, especially to
   a. receive, from a user of the communication service a request for creation, deletion or editing of a virtual call room objects and creating, deleting or editing the requested virtual call room objects associated with the user as an owner of said virtual call room,
   b. allocate, preferably on request of the user, one or more telecommunication devices of the telecommunication system to the created virtual call room, as one or more telecommunication devices associated with the call room,
   c. receive, from another user of the telecommunication system, one or more requests to connect one or more telecommunication devices with the virtual call room of the user as owner and,
   d. after connection of the other user's one or more telecommunication devices to the virtual call room of the user as owner,
      i. providing a notification of the user as the owner by means of one or more telecommunication devices allocated to the call room about connection establishment and connecting at least one of these devices to the call room, and
      ii. establishing a bi-directional communication connection with perspicuity control between at least one of the other user's one or more telecommunication devices connected to the call room and the at least one connected user's telecommunication device by means of the virtual call room,
3. a control unit implemented in hardware and or software adapted to transfer signals between telecommunication devices connected to a call room and providing perspicuity control for established communication by means of
   a. a decision to separate speakers into speaker groups based on an understandability coefficient measured as for example one or more of the following:
      i. number of interruptions per second,
      ii. spectral perceptibility of single vowels and consonants,
      iii. perceptibility of words or sentences,
   b. a decision to consolidate a first and a second speaker group into a bigger group based on one or more of the following values measured in the first and/or the second speaker group:
      i. a ratio of silent time to speaking time,
      ii. a number of aborted conversations,
      iii. a number of questions without answer,
   c. separation criteria based on one or more of the following criteria, whereby the two or more users are referred to as speakers:
      i. speakers' location, i.e. positions of the two or more users,
      ii. speakers' time of entry into a conversation,
      iii. speakers' interaction based on a semantic or a temporal correlation,
      iv. speaker context expressed as a metric using a subset of speaker-related attributes,
      v. a meaningful combination of the above,
   d. shifting all other but members of the speaker group which the speaker belongs to into a background by means of one or more of the following:
      i. a volume reduction,
      ii. a time shift,
      iii. a frequency shift,
      iv. a spectral treatment,
   e. a speaker interruption control achieved by one or more of the following:
      i. a flexible speaking time sharing,
      ii. a volume reduction for all speakers not marked as speaking,
      iii. a fixed time slicing,
      iv. dynamic speaker lists,
      v. other methods,
   f. provision of a method allowing speakers to move between speaker groups.

According to an embodiment of the invention, the method further comprises the steps of receiving of requests to allocate and to free, respectively, one or more telecommunication devices to and from, respectively, the created virtual call room.

According to an embodiment of the invention, an application to subscribe to the communication service is received from the user of the communication service. An identifier (= ID) for identification of the user with regard to the communication service is sent to the user. The user may use the identifier for his identification when requesting creation of one or more virtual call rooms. It is possible that the user makes use of the identifier for his identification when connecting to another virtual call room associated with another user as owner of the other virtual call room. This will be appropriate, e.g., for the cost transfer from the owner of the call room to the user. According to a standard provision of the present invention, costs caused by communications via a virtual call room are charged to the owner of the virtual call room. A user can also use his ID to automatically invite himself to a virtual call room while connecting to the virtual call room from a non-associated terminal.

It is possible that, after creation of a virtual call room, the virtual call room module keeps alive the virtual call room in a state where allocation and/or connection requests can be received. By means of an allocation request, a user of the communication service can request that any terminal of the telecommunication system will be allocated to an existing virtual call room associated with the user as owner of the said existing virtual call room for a purpose of notification. By means of a connection request of a user, a user of the telecommunication network can request that any terminal of the telecommunication system will be connected to any existing virtual call room for a purpose of communication. By means of a connection request of a user, a user of the telecommunication network can request that any terminal of the telecommunication system will be connected to his existing virtual call room for a purpose of communication.

According to another embodiment of the invention, one or more users already connected with the virtual call room and/or the user as owner of the virtual call room are informed when a user enters and/or leaves the virtual call room. This notification may be performed as an announcement, e.g. an audio signal, a verbal notification, a voice announcement, or as a multimedia file, e.g. an optical indication, a video message, an Instant Messaging file. The present invention provides an automatic announcement of an incoming call. Thus, the present invention enables a user to behave in a virtual call room as if in real life: before talking to someone, you "knock at the door" and go into a room. If no user is connected to a virtual call room, the user of the virtual call room can wait for another user while doing something else, e.g. walking the dog, reading, gardening, until he is notified when a user "enters" the virtual call room.

It is also possible that one or more users already connected with the virtual call room and/or the user as owner of the virtual call room are informed when a user sends a connection request in order to instantiate a connection of the user's terminal with the virtual call room. Only the owner can perform allocations of terminals to the call room. Users who are not owner of a call room can only connect to it for a purpose of conversation. Allocation is for notification purpose and, e.g., allows the system to notify the owner of the call room if someone enters it, in case the owner is not connected to.

It is possible that, particularly as an implementation of said perspicuity control, users in a virtual call room are split into multiple speaker groups and signals are routed to the multiple speaker groups based on a routing policy. It is possible that a speaker group is a special type of virtual call room, e.g., a call room on a lower hierarchy level than a normal virtual call room. Further, it is possible that a speaker group is a virtual sub-call room. It is possible that, particularly in order to execute the perspicuity control, the speaker group is merged with another speaker group to a combined speaker group and signals are routed to the combined speaker group based on a routing policy. The routing policy may be determined by a service provider and/or a service subscriber, stored in a storage unit of the virtual call room module and referred to when a routing decision must be made.

It is possible that a call room can be split into sub-call rooms to allow some hierarchy. The difference between the speaker groups and the sub-call rooms is that the speaker groups are created dynamically and the sub-call rooms are static.

According to an embodiment of the invention, particularly as an implementation of said perspicuity control, the speakers in a virtual call room are split into multiple speaker groups based on an understandability coefficient measured as one or more of the following: number of interruptions per second, spectral perceptibility of single vowels and consonants, perceptibility of words or sentences. The decision to distribute speakers of a call room into smaller groups can be made with the aid of a split/separation decision algorithm. According to a split/separation decision algorithm according to the present invention, it may be determined how many interruptions per second occur, e.g. how many speakers try to speak concurrently and thus degrade the overall perspicuity. Auxiliary, the separation/split decision algorithm can also use a more complex function as, e.g., a determination of a perceptibility of vowels and consonants under consideration of their spectral redundancy as well as a determination of a perceptibility of whole words or sentences in consideration of linguistic redundancy. A number of interruptions per second and/or a spectral perceptibility of single vowels and consonants and/or a perceptibility of words or sentences may be referred to as an understandability coefficient.

According to another embodiment of the invention, particularly as an implementation of said perspicuity control, the speaker group is merged with another speaker group to a combined speaker group based on one or more of the following values measured in the first and/or the second speaker group: ratio of silent time to speaking time, number of aborted conversations, number of questions without answer. A consolidation decision to combine and merge, respectively, two or more speaker groups into one bigger speaker group can be controlled by coefficient determined based on one or more of the following: silent time to speaking time, aborted conversations, or questions without answer. A consolidation/merge decision algorithm of the inventive method can be based on a measurement of a disparity between an active time, i.e. the time where at least one person is speaking, and a passive time, i.e. the time where nobody says anything. The need of a group consolidation is based on the assumption that the probability for an increase of conversation grows with a number of potential speakers. Other criteria to consolidate (= merge) groups together can also be a number of aborted conversations or questions without an answer, i.e. where someone asks a question and does not receive an answer from the speaker community, i.e. the community of speakers within the speaker room.

It is possible that, particularly as an implementation of said perspicuity control, a treatment regarding one or more of the signal-related properties volume, time shift, frequency shift, and spectral characteristics is applied to the signals targeted to be routed to the multiple speaker groups or the combined speaker group. This treatment may provide to shift a speaker's voice into the acoustic foreground. It is possible that a method to shift a speaker's voice to an acoustic foreground is to boost the volume of his voice or, contrary, to attenuate voices of other speakers. In case of the inventive method, the level of amplification and attenuation, respectively, can be selected in such a way that a selected speaker can be heard clearly and can be well understood. At the same time, other speakers can be heard in an acoustic background and can be possibly understood if one concentrates on the background voices. Additionally the level of amplification or attenuation, respectively, can be controlled by a relative distance between a speaker and all the listeners or, preferably, between a speaker and the listener group. The time shift is based on a theoretical approach and can only be used if shifting of a spoken text in time makes sense. The goal of a speaker's voice frequency shift is to enhance the understandability of spoken text by adopting of the speaker's voice spectrum to a hearing characteristic of listeners, e.g. a statistically averaged one. It is possible that the aforementioned adoption is done separately for each individual user of a speaker room.

According to another embodiment of the invention, particularly as an implementation of said perspicuity control, a distribution of audio data among two or more users connected to the virtual call room is controlled based on one or more of the following criteria, whereby the two or more users are referred to as speakers: speakers' location, i.e. positions of the two or more users, speakers' time of entry into a conversation, speakers' interaction based on a semantic or a temporal correlation, a set of speaker-related attributes. The present invention provides a control over the loudness of the speech of a specific participant. Thus, the present invention provides a control over how clearly a specific participant can be heard in a group communication and improves, also in case of multiple call rooms, the way the voice of a specific participant is perceived. Separation criteria to be used for partitioning of a speaker community into smaller groups, or group creation criteria can be one or more of the following grouping attributes: speaker's location, speaker's time of entry into the conversation, speaker interaction by semantic or time correlation, speaker context understood as a any set of speaker related attributes.

The distribution of audio data among two or more users connected to a virtual call room may be effected by distributing the audio data associated with the users connected to the virtual call room to two or more speaker groups generated within the virtual call room, e.g., in the form of speaker rooms or speaker areas. It is possible that each user of the virtual call room is allocated to at least one of the speaker group. It is possible that a user in a first speaker group of the virtual call room can hear audio data from the other users within the first speaker group in an acoustic foreground, i.e., loud and clear, and audio data from users within a second speaker group of the virtual call room in an acoustic background, i.e. muted and unclear. It is possible that each user connected to the virtual call room changes, at his own request, to another speaker group or be integrated to one or more additional speaker group.

It is possible that, particularly as an implementation of said perspicuity control, the speaking time allocated to a speaker within the virtual call room is limited based on one or more of the following methods: flexibly sharing the conversation time, automatically reducing the speaking volume for all speakers not marked as speaking, fixed time slicing in case of small groups, dynamic speaker lists. These aforementioned methods can provide a speaker interruption control. A speaker interruption control provides a means to avoid interruptions of speakers by other speakers in the same group, e.g. a speaker room or a virtual call room. The method of flexible conversation time sharing is based on dynamic assignment of a specific amount of speaking time to each one speaker at the beginning of his speech. During this time speaker can freely speak and cannot be disturbed by other. After the mentioned time interval has elapsed another speaker can start to speak freely. If the current speaker stops speaking earlier, other speakers are free to speak. Another possibility is to automatically reduce the sound volume for all speakers not marked as speaking. This will allow other speaker candidates so signalise their will to speak, but will not be able to drown the current speaker down. In case of small groups fixed time slicing is possible. In this case the system dynamically assigns speaking time intervals to speakers and informs them with the help of a short sound or another signal. If selected, a speaker can start to speak or he can hand over to the next speaker. In case of a dynamic speaker list, the system remembers if a speaker has tried to say something and puts him on a speaker list. Once the speaker has moved to the first place on the list he will be informed about that fact and is invited to start speaking.

The aforementioned methods of splitting and merging, signal (= audio data) treatment, distribution of audio data (= signals), and limitation of speaking time - which are referred to in the following as perspicuity control - can be used to improve perspicuity, i.e., the understandability of audio data/signals within a virtual call room. The inventive method allows to control perspicuity in case there is a big number of speakers speaking simultaneously in a common room.

The inventive idea of perspicuity control allows multiple speakers to use the same communication medium or resource as frequency channel, phone number or other identification and speak one with other without a risk of decreasing perspicuity. Even when multiple speakers use the same room understandability is assured. The present invention also works in case of common rooms with hundreds or more speakers. The inventive idea of perspicuity control harnesses human acoustic organ characteristics and a language cognition capability of the brain. The perspicuity control according to the invention separates speakers depending on situation, into groups small enough to allow user-acceptable interaction and gains perspicuity inside of groups by shifting of speaker voices being in a same group into foreground while avoiding uncontrolled speaker interruption.

A speaker room/speaker area may represent a telecommunication facility where users of a telecommunication network, even if widespread around the world, can receive (hear) one another independently of a distance between them. It is possible that a speaker room/speaker area is represented by a virtual call room and a virtual call sub-room, respectively.

It is possible that grouping attributes which determine a grouping decision, i.e. the decision which a speaker group/user is allocated to, are selected dependent on an application and can be adopted by a self-acting process. For example, a speaker location attribute is best suited for an application where a user location decides on a content of a conversation in a speaker group as, e.g. in a traffic related information exchange. In cases where there is no clear conversation subject within a speaker group, criteria based on speakers' time of entry into the conversation within the speaker group or speaker interaction by semantic or time correlation may be used.

It is possible that, according to a request of the user, the allocation between the one or more telecommunication devices of the user and the virtual call room associated with the user as an owner of said virtual call room is changed to an allocation of one or more telecommunication devices of the user to another virtual call room associated with the user as an owner of the other virtual call room. The present invention avoids a static person - phone assignment where each user is bound to a specific terminal address, e.g. a phone number. According to the present invention, a user has not a fixed binding to a terminal, e.g. phone. The present invention manages an allocation of a terminal equipment to any number of different call rooms. A users can flexibly change the allocation between his one or more terminals, or any other terminal, and one or more call rooms that he owns at any time. A user can maintain different identities, preferably without additional cost, by creating different call rooms dedicated to different areas of life, e.g. family, work, leisure, traffic, etc.

According to an embodiment the telecommunication system preserves old type binding of the buyer (owner) of the telecommunication device and the device itself only for evidence of title, some security aspects and for theft prevention. This can for example be done by binding of the owners name and address to the IMEI code of the device (IMEI = International Mobile Equipment Identity). In another embodiment there are also telecommunication devices which are registered to the telecommunication system but not owned by any user.

In an embodiment, a fee charged for the communication service is based on data that have been transmitted by means of the virtual call room, i.e. based on resource utilisation. In general, fees charged for the communication service are charged to the owner of the virtual call room. Additional mechanisms, where the user identifies himself while connecting to a virtual call room and assumes fee charged for resources consumed by his connection, exist. It is possible that communication costs are assigned to the virtual call room wherein the communication is executed. According to the present invention the charge for a telecommunication service is associated with a call room of the user. The present invention enables a user of the communication service to use any terminal as if it would be his own terminal because the communication costs are charged on his virtual call room, not on the terminal used.

It is possible that, in case of a personal virtual call room, i.e. if a virtual call room is owned by a user, at last the bill for the communication costs arising from communication over the virtual call room is sent to the user, the owner of the virtual call room. In case of a permanent public virtual call room, e.g. on traffic information, provided by an operator, the billing may be realised on a monthly fee that is requested from the users of the public virtual call room. Also, mechanisms are possible where users of a permanent public virtual call room can identify themselves on connecting to that virtual call room and can be individually charged for their own resource utilisation. More exactly, if a terminal which is used to connect to a virtual call room is allocated to another virtual call room, the user can be identified based on the data associated with that other virtual call room. If a terminal which is used to connect to a virtual call room has no allocation to any virtual call room, the user can identify himself using his personal identifier.

It is possible that, if the user of a virtual call room sets up an outgoing call, the control unit has access to rules specifying how the connection is to be set up, because the charging is associated with the virtual call room and finally the virtual call room with the user.

According to another embodiment of the invention, the control unit is further adapted to enable the user of the telecommunication system to be connected to more than one virtual call room at the same time.

The functional range, in particular at least a part of it, of the telecommunication system according to the invention may be subject to one or more of the following set of rules:
a. Users, virtual call rooms and users' equipment/terminals consist of independent subsets that can be associated one with another, but do not have to be.
b. Every user as a subscriber in the inventive telecommunication system can create at least one virtual call room and be associated as owner with said at least one virtual call room, but does not have to. If a user does not create and is not associated as owner with any virtual call room or has no terminal allocated to at least one virtual call room, he is able to contact other users, but other users are not able to contact him. This can make sense, e.g., for emergency calls or for other special services.
c. Every virtual call room is owned by its creator, i.e. by a user who created the virtual call room or by the carrier of the telecommunication network. Preferably, the owner of the virtual call room has the most comprehensive management rights on the virtual call room.
d. Every virtual call room can be denoted as a personal, team or public call room. For the personal and the team call room, the virtual call room informs the users if someone enters this virtual call room. The team call room can be useful for co-operative working. The public call room is used for conversation bound to themes or situations. For example, there can be a public call room for exchange of traffic information between drivers. The private and team call rooms differs from the public call room in that they are characterised by a constrained access, while a public call room can be entered by anyone.
e. A virtual call room can be dynamically split into multiple sub-rooms making tree-like structures with rule based signal transfer depending on understandability and other requirements,
f. The connection link between a terminal/UE and a virtual call room can flexibly change its connection type from connection-oriented to connectionless and opposite at any time, depending on situation and service requirements.
g. A terminal/UE can have a fix allocation to a virtual call room, the so-called home call room, and can be bound to any number of virtual call rooms at any time, but does not have to. This can be useful in order to stay in direct contact with more than one person or group at a time.
h. The management of a virtual call room is responsible for the understandability (= perceivability) of a conversation in case of multiple speakers: a satisfactory understandability may be achieved by a limitation of the maximal number of participants, e.g. by partitioning the participants into groups, or by other mechanisms.

It is possible that a user can set up an outgoing call to a user who has already created a virtual call room and has allocated a terminal to that virtual call room. For a user to be reachable via a terminal, i.e., being able to accept incoming calls, the user must have allocated at least one terminal to his virtual call room.

It is possible that the user receives a user ID from his service provider. For this user ID, the user can create one or more call rooms. The user cannot be reached if he has not allocated a terminal, e.g. a phone, to a virtual call room. So, after the user has created a virtual call room, he allocates a terminal with one of his own one or more virtual call rooms. From this point, the user is able to accept incoming calls. Also, after the user has created a virtual call room, he can connect a terminal with the virtual call room and wait for any call.

These as well as further features and advantages of the invention will be better appreciated by reading the following detailed description of exemplary embodiments taken in conjunction with accompanying drawings of which:
- Fig. 1: is a block diagram of a telecommunication system according to an embodiment of the invention;
- Fig. 2: is a block diagram of a telecommunication system according to another embodiment of the invention;
- Fig. 3: is a block diagram of a virtual call room module according to an embodiment of the invention;
- Fig. 4: is a message flow diagram of a communication service according to an embodiment of the invention;
- Fig. 5: is a block diagram of a telecommunication system according to another embodiment of the invention; and
- Fig. 6: illustrates an embodiment of perspicuity control.

For simplicity reasons, when referring to a user or a subscriber in the following, it is implied that the user and the subscriber uses a terminal/user equipment to execute an action like receiving, forwarding or sending a telecommunication message, even if without explicit mention of the terminal/user equipment.

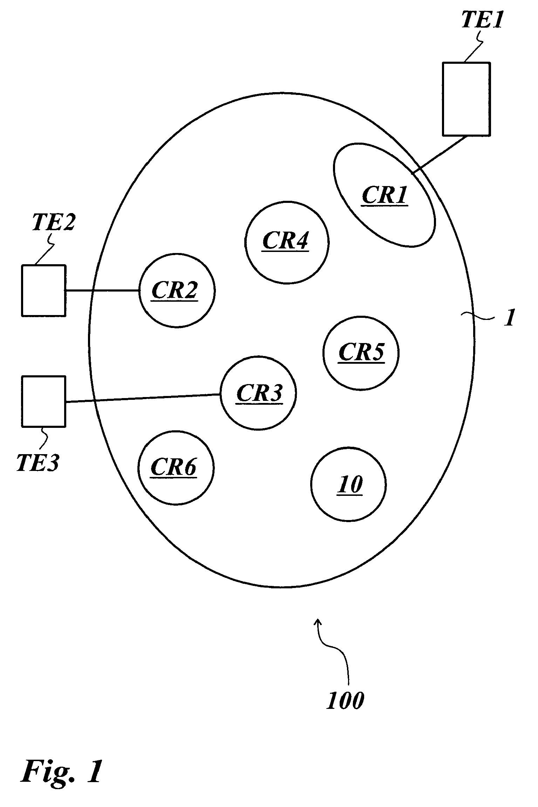

Fig. 1 shows a telecommunication system 100 comprising a telecommunication network, e.g., a PSTN and/or a packet-based network (PSTN = Public Switched Telephone Network). The telecommunication system 100 further comprises telecommunication devices TE1, TE2, TE3, e.g., fixed telephones, mobile telephones, audio-video devices, personal computers, devices for Instant Messaging, etc. The telecommunication devices TE1, TE2, TE3 represent those communication terminals which are used by subscribers of a communication service provided in the telecommunication system 100.

The telecommunication system 100 further comprises virtual call rooms CR1 to CR6 and a virtual call room module 1 for managing these virtual call rooms CR1 to CR6. The virtual call room module 1 may be represented by a call room execution engine 1. The call room execution engine 1, implemented either as a software or as dedicated hardware, further comprises a call room management subsystem 10. Each virtual call room CR1 to CR6 is identified by an unambiguous identifier such as a number, a name or any other symbol, e.g. bitmap, vector drawing, fingerprint, etc. In operation, a virtual call room enables and manages a bi-directional broadcasting of speech and other data between all user terminals connected to that call room in consideration of informational perceivability.

The telecommunication device TE1, owned by a first subscriber, is allocated to the virtual call room CR1. The telecommunication device TE2, owned by a second subscriber, is allocated to the virtual call room CR2. The telecommunication device TE3, owned by a third subscriber, is allocated to the virtual call room CR3. The virtual call rooms CR4 to CR6 currently have not allocated telecommunication devices TE1, TE2, TE3. The statement that a virtual call room or a telecommunication device is owned by a subscriber/user does not obligatorily mean that the subscriber/user possesses the virtual call room or has the virtual call room as property. This statement is simply meant to express that the subscriber/user has the right to use the call room for the telecommunication service, to change its attributes or to delete it.

For the users associated with the telecommunication devices TE1, TE2, TE3, the virtual call rooms CR1, CR2, CR3 represent a meeting room where the users can be met by other users of the telecommunication system 100.

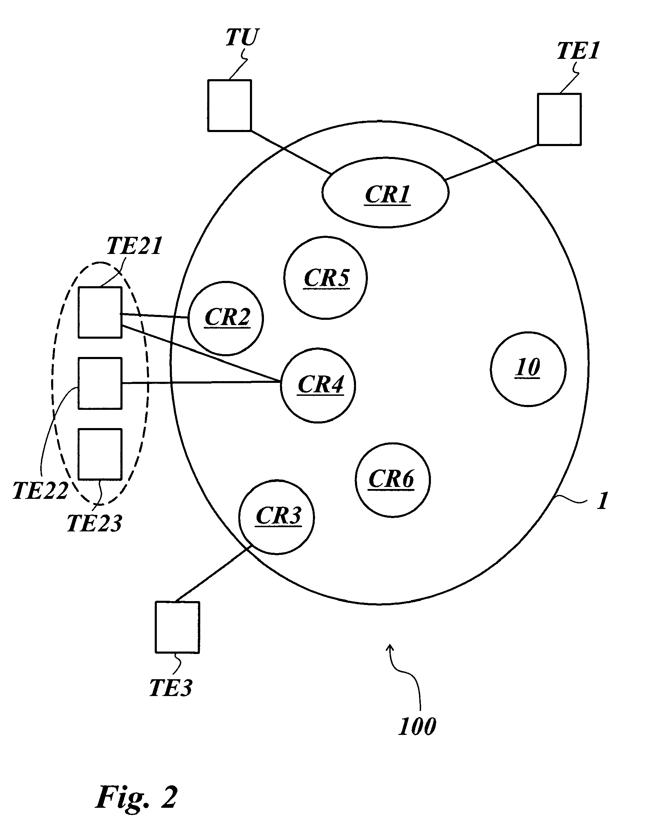

Fig. 2 shows the telecommunication system 100 of Fig. 1, with the difference that the telecommunication device TE2 has been replaced by a set of telecommunication devices TE21, TE22, and TE23, allocated to the second subscriber. The second subscriber has allocated the telecommunication device TE21 to the virtual call rooms CR2 and CR4 and the telecommunication device TE22 to the virtual call room CR4. The simultaneous allocation of the second subscriber's telecommunication device TE21 with the two virtual call rooms CR2 and CR4, e.g., the one call room associated with private life and the other call room associated with work life, means that the second subscriber can be reached on his terminal at the same time by users calling either one of the two call rooms.

A user owning a telecommunication device TU, i.e., a caller, wishes to contact the first subscriber associated with the virtual call room CR1, i.e., said first subscriber is a callee, i.e., a called user. Therefore, the caller enters an identifier of the callee's virtual call room CR1 on the caller's terminal TU, and the call room management subsystem 10 creates a link between the caller's terminal TU and the callee's virtual call room CR1, i.e. the telecommunication system 100 starts to transfer data between the virtual call room CR1 of the callee and the caller's terminal TU, using either a connectionless or connection oriented link. If the virtual call room CR1 of the callee was empty at a time the call was initiated, the telecommunication system 100 will inform the user, owner of the virtual call room CR1, i.e. the callee using the telecommunication device TE1, that someone has entered the virtual call room CR1, so that the callee can also enter this virtual call room CR1 by activating the terminal TE1 and then start a conversation with the caller.

In the Fig.2, the telecommunication device TU used by the caller is connected to the virtual call room CR1 which has terminal TE1 allocated, i.e., which is owned by the first subscriber. That means that a communication between the first subscriber's telecommunication device TE1 and the user's telecommunication device TU is possible.

In case, the virtual call room CR1 of the callee was not empty at the time the caller has entered the virtual call room CR1, the caller would be added to ongoing conversation performed via the virtual call room CR1. Then, the caller would get the possibility to invite himself and to participate in the conversation. Depending on virtual call room preferences set by an operator of the telecommunication system 100 and/or by the owner of the virtual call room, the virtual call room behaviour can simulate a typical conference room or can, for example, behave as a star-pipe where the owner of the virtual call room CR1 can hear and speak to all other users/subscribers involved in conversation in the virtual call room CR1, but all other users/subscribers can only hear and speak to the owner of the virtual call room CR1.

If a subscriber needs to stay in contact with other subscribers, e.g. for conversation or in order to get a specific piece of information, the subscriber can enter the virtual call rooms of interest and stay connected to. Since the telecommunication system optimises the usage of resources, no costs will arise if no data will be transferred. This kind of communication can be useful for collaboration groups and home office based teams. Another way to stay in contact within a group of interest is to create a corresponding private or public virtual call room that can be entered by collaborating persons.

Global communication for discussions and information exchange as, for example, news on a traffic situation can be implemented with a help of a public virtual call room. For example, a subscriber driving in a car from town A to town B can dial on his terminal TE1 an address associated with the traffic information room and so will be able to speak with other drivers and/or hear their comments on the current traffic situation on this route.

As aforementioned, a virtual call room may be responsible for understandability of messages exchanged via the virtual call room. The virtual call room for traffic information can use an algorithm based on current positions of particular subscribers and the distance of one subscriber to another subscriber. In this case, the loudness of a voice the subscribers hears in the earphone will depend on his distance to the speaker and the number of subscribers in the virtual call room per unit of covered area. In other words, if there are only a few subscribers in the virtual call room, e.g., three subscribers, one in Hamburg, one in Berlin and one in Stuttgart, each of the three subscribers will excellent hear the other two subscribers. But if there are thousands of subscribers in the room, e.g., a public virtual call room dedicated to the issue "traffic situation", with about one subscribers per square kilometre, every subscriber will only well hear their ten nearest neighbours and the voices of other subscribers will be dimmed depending on their distance to the receiving subscriber.

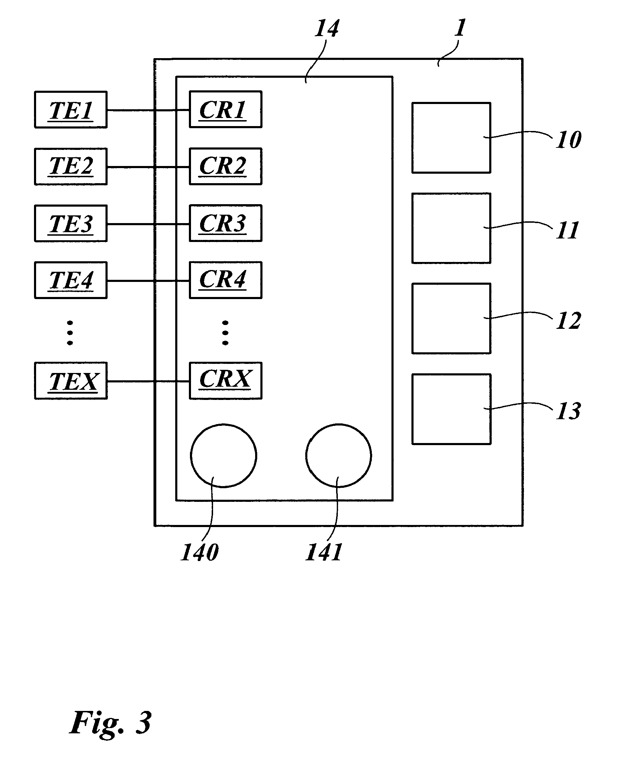

Fig. 3 shows a call room execution engine 1 comprising a call room management subsystem 10, a data transport subsystem 11, a subscriber management subsystem 12, a resource management subsystem 13, and a call room unit 14. The call room unit 14 comprises a static call room policy unit 140, a static call room traffic 141, and a plurality of virtual call rooms CR1, CR2, CR3, CR4, ..., CRx. A plurality of terminals TE1, TE2, TE3, TE4, ..., TEx are connected to the virtual call rooms CR1, CR2, CR3, CR4, ..., CRx.

The data transport subsystem 11 allows connection oriented or connectionless data transfer between the terminals TE1, TE2, TE3, TE4, ..., TEx associated with subscribers and the virtual call rooms CR1, CR2, CR3, CR4, ..., CRx. The call room management subsystem 10 allows operator and/or user controlled creation and deletion of virtual call rooms and static or dynamic binding of one or more virtual call rooms CR1, CR2, CR3, CR4, ..., CRx to any subscriber. The subscriber management subsystem 12 manages subscribers, charges, and the terminals TE1, TE2, TE3, TE4, ..., TEx. Furthermore, the telecommunication system wherein the call room execution engine 1 is implemented comprises a number of access points to which subscribers and/or users can connect their terminals to.

The call room execution engine 1 is composed of one or several inter-linked computers, i.e., a hardware platform, a software platform based on the hardware platform and several application programs executed by the system platform formed by the software and hardware platform. The functionality of the call room execution engine 1 is provided by the execution of these application programs. The application programs or a selected part of these application programs constitute a computer software product providing a communication service as described in the this description, when executed on the system platform. Further, such computer software product is constituted by a storage medium storing these application programs or said selected part of application programs.

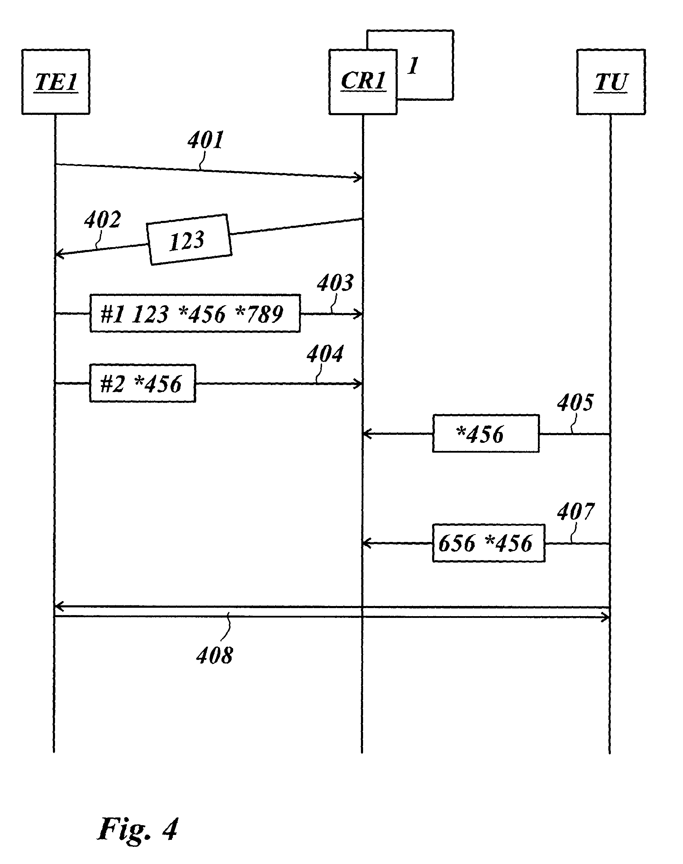

Fig. 4 shows a message flow diagram of a communication service between a subscriber owning the first terminal TE1 and a user owning a second terminal TU. First the subscriber has to submit to the carrier of the telecommunication system, preferably to the call room execution engine 1, a written or electronic application 401 for a virtual call room service. The subscriber receives then a subscription confirmation 402 comprising a user ID, e.g., the ID number "123".

After that, the subscriber creates two virtual call rooms by dialling a creation code on his terminal TE1, e.g. by dialling a call creating code ("#1"), his ID ("123"), and identifiers/addresses ("456", "789") of the virtual call rooms to be created, preceded by an asterisk ("*456 *789"), and sending the creation code as a message 403 to the call room execution engine 1.

The call room management subsystem 10 of the call room execution engine 1 creates the call room CR1, as shown in Fig. 4, and the call room CR2, not shown in Fig. 4.

The subscriber allocates his terminal TE1 with the first call room CR1 by dialling an allocation code comprising a code for telephone allocation ("#2") and the identifier/address 456 of the virtual call room, preceded by an asterisk ("*456"). The subscriber sends the allocation code as an allocation message 404 from the terminal TE1 to be associated to the call room management subsystem 10 of the call room execution engine 1. Now the subscriber can be reached in the virtual call room CR1.

The user owning the terminal TU contacts the virtual call room CR1, i.e. the user enters the call room CR1. For entering the virtual call room CR1, the user dials an enter code on his terminal TU, e.g., dialling the identifier/address ("456") of the virtual call room to be reached, preceded by an asterisk ("*456"), and sending this enter code as a message 405 to the call room execution engine 1. In case the call room policy requires that a caller has to identify himself, e.g. if requiring a user to pay for communication resources used, the user dials a contact code on his terminal TU, e.g., dialling his user ID ("656") and the identifier/address ("456") of the virtual call room to be reached, preceded by an asterisk ("*456"), and sending this contact code as a message 407 to the call room execution engine 1.

It is also possible that the caller is identified by the call room execution engine 1, e.g. using a CID (= Caller Identification) that is automatically transmitted from the caller to the callee.

After the caller using the terminal TU has contacted/entered the virtual call room CR1, the call room management subsystem 10 informs the subscriber using the terminal TE1, which is allocated to that virtual call room CR1, that someone has entered the call room CR1. If the subscriber accepts the call, the call room management subsystem 10 creates a communication connection 408 and the data transport subsystem 11 starts to broadcast voice data between the terminals TE1 and UE.

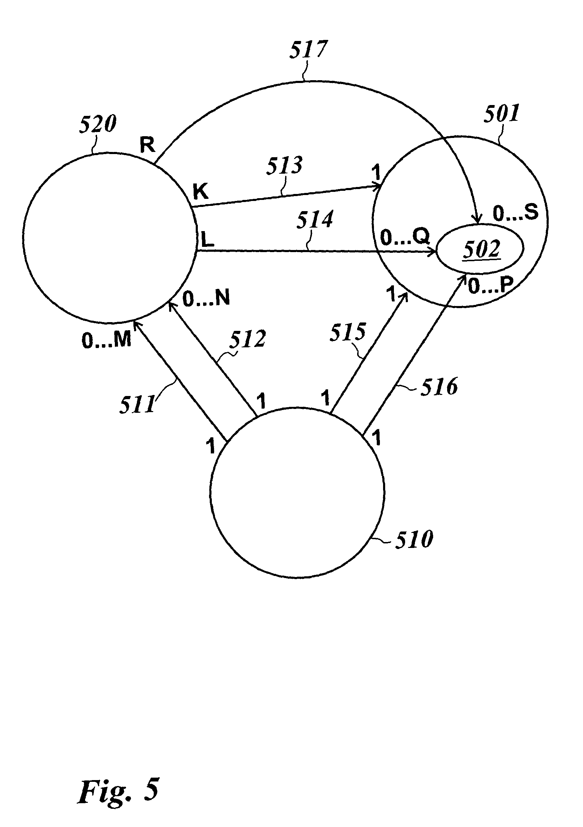

Fig. 5 shows a schematic illustration of the communication service according to an embodiment of the present invention. A (one) user 510 is an owner 511 of 0 to M devices 520, i.e., the user 510 may own 511 none, one or more than one devices 520. A (one) user 510 uses 512 0 to N devices 520, i.e., the user may use 512 none, one or more than one devices 520.

A lot of (K) devices 520 belong 513 to a (one) telecommunication system 501. The telecommunication system 501 comprises a call room 502. The term "belong" is meant to express that the devices 520 are part of the telecommunication system 501. A lot of (L) devices 520 are allocated 514 to 0 to (Q) virtual call rooms 502, i.e., the (L) devices 520 are allocated 514 to none, one or more than one virtual call rooms 502. A lot of (R) devices 520 is connected to 517 to a call room 502. A (one) user 510 is an owner 516 of 0 to P virtual call rooms 502, i.e., the user 510 may own 516 none, one or more than one virtual call rooms 502. A (one) user 510 is a subscriber 515 of the (one) telecommunication system 501.

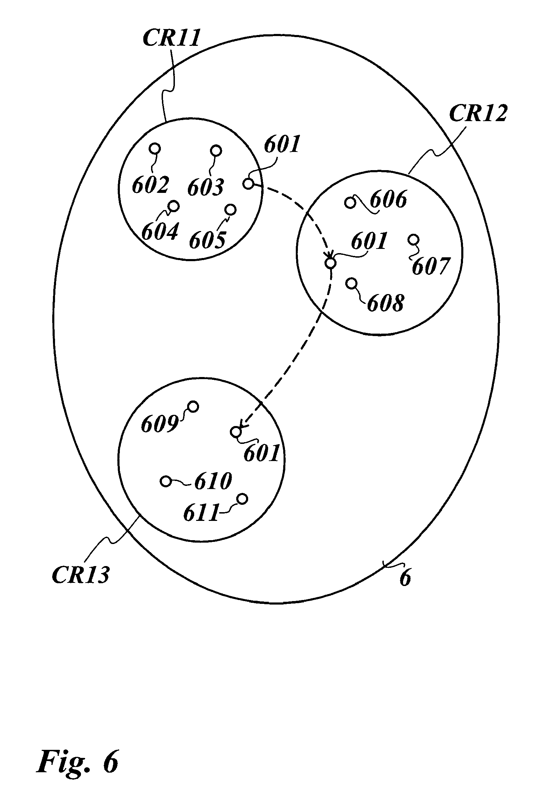

Fig. 6 shows a virtual call room 6 defined as a global call room, i.e. freely accessible by users 601 to 611 of a telecommunication network. The virtual call room 6 is dedicated to users of the telecommunication network who are interested in the exchange of information on current traffic situations, i.e. especially car drivers. John, a user 601 of the telecommunication network, wants to drive in his car from Pforzheim to the Hahn airport to reach a plane there. John 601 enters the motorway at the junction Pforzheim-West. John 601 is late and the gate time for his plane at the Hahn airport closes in three hours. John 601 enters the global call room 6 and sees on a display of his navigation system which is used as a telecommunication device different coloured areas CR11, CR12, CR13 depicting currently active speaker groups of the virtual call room 6. John 601 hears well few speakers in the vicinity of Karlsruhe, members of a first sub-room CR11, and an acoustically far background of speakers from other speaker groups CR12, CR13. He asks the driver community of the first sub-room CR11 for the current traffic situation and gets an answer from a driver on the motorway A5 driving to Basel that there is no traffic jam between Frankfurt and Karlsruhe. Calmed down, John 601 slows a little bit the speed of his car. Now he is sure he will get his plane at time. Then minutes later, somebody cries, Strewth!, a big truck has crashed into the left plank of the motorway and tilted over. John 601 hears tire jar and people crying and speaking one over the other. Few seconds later most voices move to the background and John 601 can well understand what has happened and what is the current situation. The motorway A5 towards Frankfurt is completely blocked for probably the next few hours. John 601 enters this information into the navigation system. A navigation map displays now a new route via Karlsruhe city and the motorway A65. But what is the traffic situation there? John 601 selects the speaker group CR12 in the Karlsruhe area and asks the speaker group CR12 for traffic information. He gets the answer that there is no traffic congestion as far as Landau. In between, the situation on the motorway A5 chills out and speaker groups begin to disperse, so while reaching Landau John 601 is in a single speaker group. Reaching Neustadt, John 601 hears that there is stagnant traffic in the vicinity of Boehl-Iggelheim so John 601 decides to take the federal road B39 to get to the motorway A63 at Kaiserslautern. About half an hour later John 601 hears a few people who - just as him - are driving to the airport and are in trouble with time. Conversation revives and John 601 sees that he is now in a small speaker group CR13 moving fast on motorway A61 toward the Hahn airport. Somebody starts counting people being on the way to Hahn now. People begin to count, one, two, three, ..., twenty-five, ..., forty-three sounds as a last number. There are forty-three persons trying to catch the same plane at Hahn airport as John 601, so John 601 decides to call the airport, to speak with the responsible person about the current traffic situation, and to ask them to prolong the boarding time by about ten minutes. The airport representative consults the plane crew and reports the crew's approval to John 601. A deep-drawn sigh leaves forty-three gorges. Forty-two sounds of the forty-three sighs are muted by the electronics controlling this speaker group CR13 and only the fastest of them sounds long in forty-three car cabins of the users 601, 609, 610, 611 of this speaker group CR13.

Fig. 6 shows the user 601 in between and connected with slashed lines to the active speaker groups CR11, CR12, CR13. This illustrates that the association of the user 601 to one or more of the active speaker groups CR11, CR12, CR13 be can changed based on the user's 601 request and/or based on a user attribute of the user 601, e.g. his location.

## Claims

1. A method of providing a communication service in a telecommunication system (100), the method comprising the steps of:
receiving, from a user of the communication service, a request (403) for creation of a virtual call room (CR1);
creating the requested virtual call room (CR1) associated with the user as an owner of the virtual call room (CR1);
allocating one or more telecommunication devices (TE1) of the telecommunication system (100) to the created virtual call room (CR1), as one or more telecommunication devices (TE1) associated with the user;
receiving from another user of the telecommunication system (100) one or more requests to connect one or more telecommunication devices (TU) with the virtual call room (CR1) of the user; and
after connection of the other user's one or more telecommunication devices (TU) with the virtual call room (CR1) of the user, establishing a bi-directional communication connection (408) with perspicuity control between at least one of the user's one or more telecommunication devices (TE1) and at least one of the other user's one or more telecommunication devices (TU) by means of the virtual call room (CR1).

2. The method of claim 1,
**characterised in**
**that** the method further comprises the steps of:
receiving from the user of the communication service a request (401) to subscribe to the communication service;
sending (402) to the user an identifier for identification of the user with regard to the communication service; and
using, by the user, the identifier for identification when requesting (403) the creation of the virtual call room (CR1).

3. The method of claim 1,
**characterised in**
**that** the method further comprises the step of:
informing one or more already-connected users who are already connected with the virtual call room (CR1) and/or the user as owner of the virtual call room (CR1) when a user enters and/or leaves the virtual call room (CR1).

4. The method of claim 1,
**characterised in**
**that** the method further comprises the steps of:
splitting the virtual call room (CR1) into multiple speaker groups (CR11, CR12, CR13) or merging the virtual call room (CR1) with another virtual call room (CR2) to a combined virtual call room; and
routing signals to the multiple speaker groups (CR11, CR12, CR13) or the combined virtual call room based on a routing policy.

5. The method of claim 4,
**characterised in**
**that** the method further comprises the step of:
splitting the virtual call room (CR1) into two or more speaker groups (CR11, CR12, CR13) based on an understandability coefficient determined as one or more of the following: number of interruptions per second, spectral perceptibility of single vowels and consonants, perceptibility of words or sentences.

6. The method of claim 4,
**characterised in**
**that** the method further comprises the step of:
merging a first speaker group (CR1) with a second speaker group (CR2) to a combined speaker group based on one or more of the following values determined in the first and/or the second speaker group: ratio of silent time to speaking time, number of aborted conversations, number of questions without answer.

7. The method of any of the claims 4 to 6,
**characterised in**
**that** the method further comprises the step of:
applying to the signals targeted to be routed to the multiple speaker groups (CR11, CR12, CR13) or the combined virtual call room a treatment regarding one or more of the following properties of the signals: volume, time shift, frequency shift, spectral characteristics.

8. The method of any of the preceding claims,
**characterised in**
**that** the method further comprises the step of:
controlling a distribution of audio data among two or more users connected to the virtual call room (CR1, CR11, CR12, CR13) and/or the user as owner of the virtual call room (CR1) based on one or more of the following criteria, whereby the two or more users and the user as owner of the virtual call room (CR1) are referred to as speakers:
speakers' location, speakers' time of entry into a conversation, speakers' interaction based on a semantic or a temporal correlation, a set of speaker-related attributes.

9. The method of claim 8,
**characterised in**
**that** the method further comprises the step of:
limiting the speaking time allocated to a speaker within the virtual call room (CR1, CR11, CR12, CR13) based on one or more of the following methods: flexibly sharing the conversation time, automatically reducing the speaking volume for all speakers not marked as speaking, fixed time slicing in case of small groups, dynamic speaker lists.

10. The method of claim 1,
**characterised in**
**that** the method further comprises the step of:
according to a request of the user, changing the assignment between the one or more telecommunication devices (TE1) of the user and the virtual call room (CR1) associated with the user as an owner to an assignment between the one or more telecommunication devices (TE1) of the user and another virtual call room associated with the user as an owner.

11. The method of claim 1,
**characterised in**
**that** the method further comprises the step of:
charging for the communication service a charge which is based on data that have been transmitted by means of the virtual call room (CR1).

12. The method of claim 1,
**characterised in**
**that** the method further comprises the step of:
assigning communication costs to the virtual call room (CR1) wherein the communication is executed.

13. A virtual call room module (1) for providing a communication service in a telecommunication system (100), the virtual call room module (1) comprising a control unit (10) adapted to receive, from a user of the communication service, a request (403) for creation of a virtual call room (CR1), create the requested virtual call room (CR1) associated with the user as an owner of the virtual call room (CR1), allocate one or more telecommunication devices (TE1) of the telecommunication system (100) with the created virtual call room (CR1), as one or more telecommunication devices (TE1) associated with the user, receive from another user of the telecommunication system (100) one or more requests to connect one or more telecommunication devices (TU) with the virtual call room (CR1) of the user, as one or more telecommunication devices (TU) associated with the other user, and, after connection of the other user's one or more telecommunication devices (TU) with the virtual call room (CR1) of the user, establish a bi-directional communication connection (408) with perspicuity control between at least one of the user's one or more telecommunication devices (TE1) and at least one of the other user's one or more telecommunication devices (TU) by means of the virtual call room (CR1).

14. The virtual call room module (1) of claim 13,
**characterised in**
**that** the control unit (10) is further adapted to enable the user of the communication service and/or the other user of the telecommunication system (100) to be associated with and or connected to more than one virtual call room (CR1).
